# EUROPÄISCHE PATENTSCHRIFT

(11) **EP 4 377 584 B1**
(45) Veröffentlichungstag und Bekanntmachung des Hinweises auf die Patenterteilung: **10.09.2025**
(21) Anmeldenummer: 22782844.9
(22) Anmeldetag: 04.07.2022
(51) Int. Cl.: F16F 9/04, F16F 9/05, F16F 9/516, F16F 9/512

(54) **LUFTFEDER**
PNEUMATIC SPRING
RESSORT PNEUMATIQUE

(30) Priorität: 27.07.2021 DE 102021208099
(43) Veröffentlichungstag der Anmeldung: 05.06.2024
(73) Patentinhaber: ContiTech Deutschland GmbH, 30175 Hannover (DE)
(72) Erfinder: STÖTER, Bernd, 30165 Hannover (DE)
(74) Vertreter: Preusser, Andrea
(86) Internationale Anmeldenummer: PCT/DE2022/200149
(87) Internationale Veröffentlichungsnummer: WO 2023/006158

(56) Entgegenhaltungen:
- WO-A1-2016/168500
- JP-A- 2008 114 681
- SU-A1- 1 163 067
- SU-A2- 1 110 963
- SU-A2- 1 222 930
- US-A- 6 089 552
- US-A1- 2008 308 367

## Beschreibung

Die Erfindung betrifft eine Luftfeder gemäß dem Oberbegriff des Anspruchs 1. Weiterhin betrifft die Erfindung eine Sitzfederung eines Kraftfahrzeugs gemäß Anspruch 10, eine Kabinenlagerung eines Kraftfahrzeugs gemäß Anspruch 11 und eine Maschinenlagerung gemäß Anspruch 12.

### Stand der Technik

Luftfedern werden in verschiedenen Anwendungen eingesetzt. So können Luftfedern in Straßen- oder Schienenfahrzeugen zur Isolierung von durch Fahrbahnunebenheiten eingeleiteten Stößen und Vibrationen zwischen Achse und Fahrzeugchassis oder zwischen Fahrzeugchassis und Fahrerkabine angeordnet sein. Eine andere Anwendung repräsentiert die schwingungsentkoppelte Lagerung von Maschinen auf Luftfedern. Häufig werden Luftfedern mit weiteren Einrichtungen zur Dämpfung versehen.

Aus dem Stand der Technik sind Dämpfungsmechanismen für Luftfedern bekannt, die unter Verwendung verschiedener Dämpfungsmedien ihre Funktion erfüllen.

Eine Möglichkeit besteht darin, der Luftfeder einen hydraulisch arbeitenden Stoßdämpfer parallel zu schalten. Diese Stoßdämpfer weisen in der Regel in Zug- und Druckrichtung unterschiedliche Dämpfungscharakteristika auf. So kann der Stoßdämpfer in der Druckstufe, zum Beispiel während des Einfederns eines Rades, der Einfederung eine geringe Dämpferkraft entgegensetzen, während die Zugstufe die Ausfederbewegung mit einer größeren Dämpferkraft abbremst.

Es erweist sich als Nachteil, dass Hydraulikdämpfer als separate Bauteile ein hohes Maß an zusätzlichen Kosten verursachen und zudem viel Bauraum beanspruchen. Weiterhin ist die Entsorgung der Hydraulikflüssigkeit bei Lebensende des Hydraulikdämpfers sowie die Gefahr eines Austretens bei Undichtigkeiten ein unter Umwelt- und Nachhaltigkeitsaspekten kritischer Gesichtspunkt.

Eine weiterer Dämpfungsmechanismus sieht vor, dass während des Ein- und Ausfederns der Luftfeder in Folge von Druckdifferenzen ein Überströmen von Luft aus dem Druckraum der Luftfeder in eine weitere Kammer erfolgt, sodass während des Überströmens Energie dissipiert wird, wodurch eine Dämpfungswirkung erzielt werden kann.

Die WO 2016 168 500 A1 offenbart eine Dämpfungseinrichtung einer Luftfeder, wobei die Dämpfungseinrichtung eine Blendenanordnung und ein Ventil aufweist. Das Ventil weist in Abhängigkeit der Druckdifferenz der beiden Volumina unterschiedliche Durchflusseigenschaften auf, sodass in Zug- und Druckrichtung unterschiedliche Dämpfungseigenschaften der Luftfeder realisierbar sind. Als Dämpfung kommt hierbei im Wesentlichen der thermodynamische Energieverlust an Blenden und in Drosseln zum Tragen.

Bei Verwendung einer Blendenanordnung ergibt sich eine quadratische Abhängigkeit des Druckverlustes zum Durchflussvolumen. Die Wirksamkeit der Dämpfungseinrichtung ist somit für einen schmalbandigen Bereich von Schwingungsamplituden optimiert, weshalb die korrekte Dimensionierung des Blendenquerschnitts besonders bedeutsam und anwendungsspezifisch zu bestimmen ist.

Die SU 1 222 930 A2 offenbart eine weitere Dämpfungseinrichtung einer Luftfeder. Die SU 1 222 930 A2 offenbart eine Luftfeder mit den Merkmalen der Präambel des Anspruchs 1.

Die WO 2017 004 472 A1 offenbart einen Dämpfungsmechanismus in Form eines gewendelten Luftkanals, durch den die Luft zwischen Arbeitsvolumen und Kolben hin und her strömt. Die Strömungsverluste des Fluids im Kanal bewirken hierbei eine Dämpfung. Zusätzlich zur Dämpfung können mittels der Luftmasse im Kanal auch Tilgereffekte genutzt werden.

Die JP 2008 114681 A offenbart eine weitere Luftfeder.

Die DE 296 20 211 U1 offenbart eine Dämpfungseinrichtung, wobei eine wendelförmige Überströmleitung zwischen einer Luftfeder und einem Dämpfertopf angeordnet ist und diese miteinander verbindet. Die Strömungsverluste innerhalb der Überströmleitung während des Überströmens des Luftvolumens zwischen der Luftfeder und dem Dämpfertopf bewirken hierbei eine Dämpfung.

Bei dem zuvor eingeführten Stand der Technik erweist es sich als nachteilig, dass keine unterschiedlichen Dämpfungsmechanismen für die Zug- und Druckrichtung der Luftfeder erzielt werden können, was nicht dem Ideal eines Fahrzeugdämpfers entspricht.

### Aufgabe

Der Erfindung liegt die Aufgabe zugrunde, eine Dämpfungseinrichtung für eine Luftfeder bereit zu stellen, die unterschiedliche Dämpfungsmechanismen für die Zug- und Druckrichtung ermöglicht. Insbesondere sollen bei einem initialen schnellen Anstieg vorzugsweise geringe Dämpferkräfte wirken. Weiterhin liegt die Aufgabe darin, die Dämpfungseinrichtung ohne umweltschädliche Medien zu betreiben.

### Lösung der Aufgabe

Die Lösung dieser Aufgabe ergibt sich durch eine Luftfeder mit den Merkmalen des Hauptanspruchs.

Anspruch 10 offenbart eine Sitzfederung eines Kraftfahrzeugs mit einer erfindungsgemäßen Luftfeder.

Anspruch 11 offenbart eine Kabinenlagerung eines Kraftfahrzeugs mit einer erfindungsgemäßen Luftfeder.

Anspruch 12 offenbart eine Maschinenlagerung mit einer erfindungsgemäßen Luftfeder.

Weitere vorteilhafte Ausbildungen sind in den abhängigen Ansprüchen offenbart.

### Vorteile der Erfindung

Die in dem Anspruch 1 offenbarte erfindungsgemäße Luftfeder umfasst einen flexiblen Balg aus elastomerem Material, ein unteres Anschlussteil und ein oberes Anschlussteil, einen Hohlkörper und eine Dämpfungseinrichtung, wobei der Balg, das untere Anschlussteil und das obere Anschlussteil einen ersten Druckraum bilden. Der Hohlkörper bildet einen zweiten Druckraum und weist die Dämpfungseinrichtung auf, wobei die Dämpfungseinrichtung einen Luftkanal mit einem ersten Ende und einem zweiten Ende und eine Blende aufweist. Die Blende und der Luftkanal verbinden den ersten Druckraum und den zweiten Druckraum miteinander. Die Dämpfungseinrichtung weist eine Venturi-Düse auf, wobei die Blende in eine Einströmseite der Venturi-Düse mündet und das zweite Ende des Luftkanals in einen Unterdruckanschluss der Venturi-Düse mündet. Erfindungsgemäß ist der Luftkanal wendelförmig ausgebildet.

Mit anderen Worten gesagt kann durch einen wendel- oder mäanderförmigen Verlauf des Luftkanals die effektive Länge des Luftkanals in einem vorbestimmten Bauraumvolumen variiert werden. Durch eine Variierung der effektiven Länge kann die Dissipation der kinetischen Energie innerhalb des Luftkanals anwendungsspezifisch angepasst werden. Daraus folgend kann durch die effektive Länge des Luftkanals die Dämpfungswirkung der Dämpfungseinrichtung angepasst werden.

Mit anderen Worten gesagt umfasst die erfindungsgemäße Luftfeder zwei Druckräume, welche voneinander abgegrenzt sind. Der erste und der zweite Druckraum sind über zwei Öffnungen in der Wandung des Hohlkörpers über einen Luftkanal und eine Blende miteinander verbunden. Der Luftkanal und die Blende bilden zusammen mit der Venturi-Düse, die den Luftkanal und die Blende miteinander verbindet, eine Dämpfungseinrichtung. Genauer gesagt mündet die Blende in die Einströmseite Venturi-Düse, wobei das zweite Ende des Luftkanals in den Unterdruckanschluss der Venturi-Düse mündet.

Der Hohlkörper kann in einer Ausführungsform innerhalb des Volumens des Luftfederbalges angeordnet sein. Dies kann zum Beispiel bei der Verwendung erfindungsgemäßen Lösung in einer Faltenbalgluftfeder als vorteilhaft erweisen, da auf diese Weise kein weiteres Bauraumvolumen erforderlich ist.

In einer weiteren Ausführungsform kann der Hohlkörper bei einer Rollbalgluftfeder durch den Kolben gebildet sein. Hierdurch können bereits vorhandene Komponenten der Luftfeder funktional integriert werden, wodurch die Anzahl der Komponenten und der Fertigungsaufwand reduziert werden können und der Bauraumbedarf der Luftfeder unverändert ist.

Durch die erfindungsgemäße Lösung kann eine Luftdämpfung realisiert werden, sodass auf zusätzliche Dämpfungsbauteile und Dämpfungsmedien verzichtet werden kann. Hierdurch können sich insbesondere Bauraum- und Gewichtsvorteile sowie auch ökologische Vorteile des Feder-Dämpfersystems gegenüber konventionellen Lösungen ergeben. Weiterhin können durch den Einsatz einer Venturi-Düse verschiedene Dämpfungscharakteristika beim Ein- und Ausfedern der Luftfeder erzielt und anwendungsspezifisch angepasst werden.

Grundsätzlich können als Material des Balges alle der fachkundigen Person bekannten Elastomere verwendet werden. In einer bevorzugten Ausführungsform ist das Elastomer ausgewählt aus der Gruppe bestehend aus Ethylen-Propylen-Mischpolymerisat (EPM) oder Ethylen-Propylen-Dien-Mischpolymerisat (EPDM) oder Nitrilkautschuk (NBR) oder (teil)hydrierter Nitrilkautschuk (HNBR) oder Fluor-Kautschuk (FKM) oder Chloropren-Kautschuk (CR) oder Naturkautschuk (NR) oder Styrol-Butadien-Kautschuk (SBR) oder Isopren-Kautschuk (IR) oder Butylkautschuk (IIR) oder Brombutylkautschuk (BIIR) oder Chlorbutylkautschuk (CIIR) oder Butadien-Kautschuk (BR) oder Chloriertes Polyethylen (CM) oder Chlorsulfoniertes Polyethylen (CSM) oder Polyepichlorhydrin (ECO) oder Ethylen-Vinylacetat-Kautschuk (EVA) oder Acrylat-Kautschuk (ACM) oder Ethylen-Acrylat-Kautschuk (AEM) oder Silikonkautschuk (MQ, VMQ, PVMQ, FVMQ) oder fluorierter Methylsilikonkautschuk (MFQ) oder perfluorinierter Propylen-Kautschuk (FFPM) oder Perfluorcarbon-Kautschuk (FFKM).

Die genannten Kautschuke können hierbei alleine oder im Verschnitt, d.h. als Blend, eingesetzt werden.

Gemäß einem Aspekt ist der Hohlkörper innerhalb des ersten Druckraums angeordnet. Mit anderen Worten gesagt unterteilt der Hohlkörper das Innenvolumen der Luftfeder in einen ersten Druckraum und einen zweiten Druckraum. Es ergibt sich hierdurch auf besonders vorteilhafte Weise ein sehr kompakter Aufbau, bei dem das Volumen des Hohlkörpers und die Dämpfungseinrichtung in das bestehende Bauraumvolumen der Luftfeder integriert werden können. Hierdurch wird der Gebrauch der erfindungsgemäßen Luftfeder in Anwendungen ermöglicht, die herkömmliche Luftfedern des gleichen Bauraumvolumens gebrauchen.

Gemäß einem weiteren Aspekt der vorliegenden Erfindung ist der Hohlkörper außerhalb des ersten Druckraums angeordnet. Mit anderen Worten gesagt kann eine handelsübliche Luftfeder mit einem Zusatzvolumen außerhalb der Luftfeder verbunden werden. Auf vorteilhafte Weise können hierdurch bestehende Luftfederkonstruktionen um ein Zusatzvolumen mit einer Dämpfungseinrichtung erweitert werden, ohne die Luftfeder umzukonstruieren.

Eine weitere vorteilhafte Ausbildung besteht darin, dass bereits bestehende Komponenten außerhalb der Luftfeder als Zusatzvolumen mit einer Dämpfungseinrichtung verwendet werden können. Hierdurch können bereits vorhandene Komponenten der Luftfeder funktional integriert werden, wodurch die Anzahl der Komponenten und der Fertigungsaufwand reduziert werden können und der Bauraumbedarf der Luftfeder unverändert ist.

Gemäß einem weiteren Aspekt der vorliegenden Erfindung ist die Luftfeder als eine Faltenbalgluftfeder ausgebildet. Die zuvor genannten Vorteile der erfindungsgemäßen Lösung lassen sich so auf eine Faltenbalgluftfeder übertragen.

Gemäß einem weiteren Aspekt der vorliegenden Erfindung ist die Luftfeder als eine Rollbalg-Luftfeder ausgebildet ist, bei der das untere Anschlussteil durch einen Kolben gebildet ist. Bei dieser Ausführungsform kann der Hohlkörper entweder innerhalb oder außerhalb des ersten Druckraums angeordnet sein. Die zuvor genannten Vorteile der erfindungsgemäßen Lösung lassen sich so auf eine Rollbalg-Luftfeder übertragen.

Gemäß einem weiteren Aspekt der vorliegenden Erfindung ist der Kolben als zweiter Druckraum ausgebildet. Mit anderen Worten gesagt ist in dieser Ausführungsform der Hohlkörper außerhalb des ersten Druckraums angeordnet. Hierbei ist es besonders vorteilhaft, dass der Kolben gleichzeitig den Hohlkörper bildet, wodurch vorhandene Komponenten der Luftfeder funktional integriert werden und die Anzahl der Komponenten und der Fertigungsaufwand reduziert werden kann. Gleichzeitig bleibt der Bauraumbedarf der Luftfeder unverändert.

Gemäß einem weiteren Aspekt der vorliegenden Erfindung weist das obere Anschlussteil einen Anschluss zur externen Luftversorgung auf. Hierdurch kann das obere Anschlussteil funktional in das Luftfedersystem integriert werden, wodurch die Anzahl der Komponenten und der Fertigungsaufwand reduziert werden können. Es können hierdurch wirtschaftliche Vorteile generiert werden.

Gemäß einem weiteren Aspekt der vorliegenden Erfindung ist der Luftkanal schlauch- oder rohrförmig ausgebildet. Ein Vorteil eines runden Querschnitts liegt darin, dass der Luftkanal besonders biegeflexibel ist.

Gemäß einem weiteren Aspekt der vorliegenden Erfindung ist die Blende durch ein Rückschlagventil mit einem federbelastetem Schließelement verschließbar. Mit anderen Worten gesagt kann das Ventil der Blende beim Einströmen der Luft in den zweiten Druckraum während des Einfederungsvorgangs geöffnet sein. Beim Ausfedern und einer Umkehr der Strömungsrichtung kann das Ventil geschlossen werden, wodurch die Luft ausschließlich durch den Luftkanal in den ersten Druckraum zurückströmen kann. Hierdurch können in Abhängigkeit der Strömungsrichtung der Luft unterschiedliche Dämpfungscharakteristika beim Ein- oder Ausfedern der Luftfeder erzielt werden.

Eine weitere Ausführungsform der vorliegenden Erfindung offenbart eine Sitzfederung eines Kraftfahrzeugs mit einer erfindungsgemäßen Luftfeder. Die eingangs erläuterten Vorteile der erfindungsgemäßen Luftfeder können hierdurch auf beliebige Sitzfederungen eines Kraftfahrzeugs übertragen werden.

Eine weitere Ausführungsform der vorliegenden Erfindung offenbart eine Kabinenlagerung eines Kraftfahrzeugs mit einer erfindungsgemäßen Luftfeder. Die eingangs erläuterten Vorteile der erfindungsgemäßen Luftfeder können hierdurch auf verschiedenste Kabinenlagerung eines Kraftfahrzeugs übertragen werden.

Eine weitere Ausführungsform der vorliegenden Erfindung offenbart eine Maschinenlagerung mit einer erfindungsgemäßen Luftfeder. Die eingangs erläuterten Vorteile der erfindungsgemäßen Luftfeder können hierdurch auf verschiedenste Maschinenlagerungen übertragen werden.

### Erläuterung Figuren

Anhand der Figuren werden im Folgenden verschiedene Ausführungsbeispiele der Erfindung näher erläutert.
Fig. 1 zeigt eine Faltenbalgluftfeder mit einer erfindungsgemäßen Dämpfungseinrichtung innerhalb des ersten Druckraums in einer Schnittdarstellung.
Fig. 2 zeigt eine Rollbalg-Luftfeder mit einer erfindungsgemäßen Dämpfungseinrichtung außerhalb des ersten Druckraums in einer Schnittdarstellung.
Fig. 3 zeigt eine erfindungsgemäße Dämpfungseinrichtung.
Fig. 4a zeigt die Federhöhe einer Luftfeder an der Achse eines Fahrzeugs über die Zeit.
Fig. 4b zeigt den zeitlichen Verlauf der Drücke innerhalb des ersten und zweiten Druckraums.

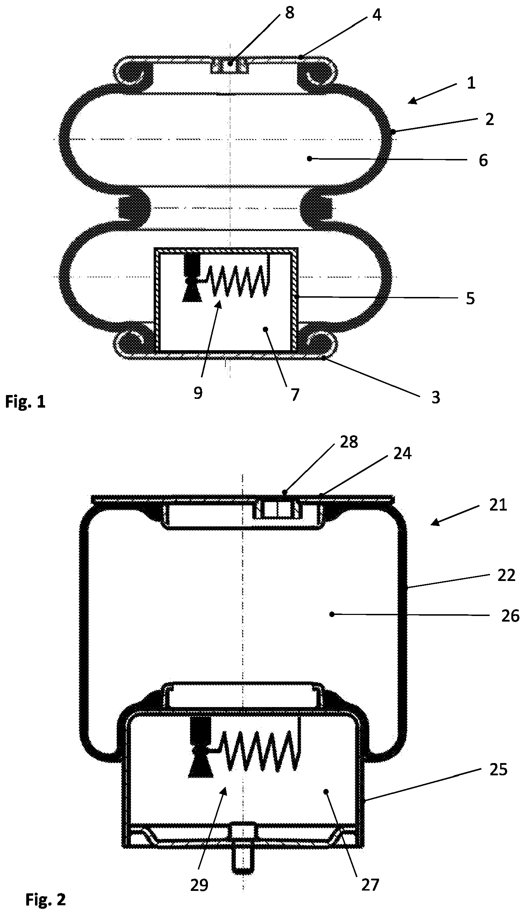

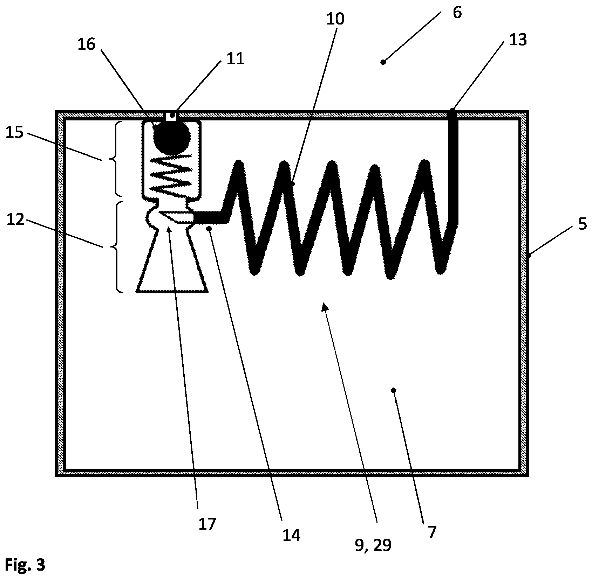

Fig. 1 zeigt eine Faltenbalgluftfeder 1 mit einer erfindungsgemäßen Dämpfungseinrichtung 9 innerhalb des ersten Druckraums 6 in einer Schnittdarstellung. Die Luftfeder 1 weist einen flexiblen Balg 2, ein unteres Anschlussteil 3 sowie ein oberes Anschlussteil 4 auf. Im Inneren des ersten Druckraums 6, der durch den flexiblen Balg 2, das untere Anschlussteil 3 und das obere Anschlussteil 4 gebildet ist, ist ein starrwandiger Hohlkörper 5 angeordnet. Der Hohlkörper 5 ist mit dem unteren Anschlussteil 3 verbunden. Durch den Hohlkörper 5 wird das Innere der Luftfeder 1 in einen ersten Druckraum 6 und einen zweiten Druckraum 7 unterteilt. Das obere Anschlussteil 4 weist einen Anschluss 8 zur externen Luftversorgung auf. Über den Anschluss 8 wird die Luftfeder 1 durch einen Kompressor mit Luft versorgt. Im Inneren des Hohlkörpers 5 ist eine Dämpfungseinrichtung 9 angeordnet, die den ersten Druckraum 6 und den zweiten Druckraum 7 miteinander verbindet, sodass über die Dämpfungseinrichtung 9 die Luft von einem Druckraum 6, 7 in den anderen Druckraum 6, 7 überströmen kann. Der Aufbau der Dämpfungseinrichtung 9 wird in der Beschreibung zur Figur 3 näher erläutert.

Fig. 2 zeigt ein weiteres Ausführungsbeispiel der erfindungsgemäßen Luftfeder 21, wobei eine Rollbalg-Luftfeder 21 mit einer erfindungsgemäßen Dämpfungseinrichtung 29 außerhalb des ersten Druckraums 26 angeordnet ist. In dem dargestellten Ausführungsbeispiel dient der Kolben 25 als zweiter Druckraum 27. Der Kolben 25 ist an ein Fahrwerksbauteil angebunden und überträgt die Ein- und Ausfederungsbewegungen auf die Luftfeder 21. Der Balg 22 ist mit dem oberen Anschlussteil 24 und dem Kolben 25 gasdicht verbunden. Über den Anschluss zur externen Luftversorgung 28 kann dem ersten Druckraum 26 die für den Betrieb erforderliche Luft zugeführt werden.

Figur 3 zeigt die erfindungsgemäße Dämpfungseinrichtung 9, die in dem Hohlkörper 5 angeordnet ist. Die Dämpfungseinrichtung 9 weist einen schlauch- oder rohrförmigen Luftkanal 10, eine Blende 11 und eine Venturi-Düse 12 auf. Der Luftkanal 10 ist mit einem ersten Ende 13 durch die Wandung des Hohlkörpers 5 hindurch mit dem ersten Druckraum 6 verbunden. Das gegenüberliegende zweite Ende 14 des Luftkanals 10 mündet in den Unterdruckanschluss 17 der Venturi-Düse 12. Die Einströmseite 15 der Venturi-Düse 12 wird aus der Blende 11 gebildet. Die Einströmseite 15 weist außerdem ein Rückschlagventil mit einem federbelasteten Schließelement 16 auf.

Während des Einfederungsvorgangs wird der Balg 2, 22 zusammengestaucht, sodass der Druck in dem ersten Druckraum 6, 26 ansteigt. In Folge des Druckanstiegs öffnet das Rückschlagventil 16, so dass Luft zusätzlich durch die Blende 11 von dem ersten Druckraum 6, 26 in den zweiten Druckraum 7, 27 strömt. Dieser Luftstrom passiert in der Venturi Düse 12 den Unterdruckanschluss 17. Am zweiten Ende 14 des Luftkanals 10 entsteht hierdurch örtlich ein Druck, welcher geringer ist als in dem zweiten Druckraum 7, 27. Somit erfährt während des ersten Druckanstiegs in dem zweiten Druckraum 7, 27 der Luftkanal 10 zwischen seinen Enden 13 und 14 eine höhere Druckdifferenz als dies ohne Venturi-Düse 12 der Fall wäre. Die höhere Druckdifferenz zwischen dem ersten Druckraum 6, 26 und dem zweiten Druckraum 7, 27 führt zu einem höheren Volumenstrom pro Zeiteinheit und somit zu einer Verringerung des Spitzendrucks bei maximaler Einfederung, welches gleichbedeutend mit einer weicheren initialen Einfederung ist.

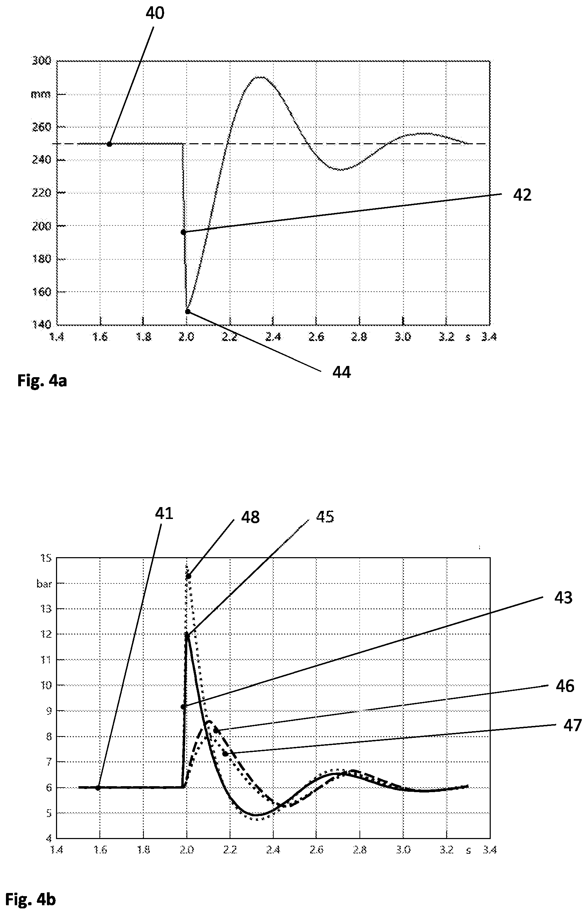

Die Luftdämpfung als Zusammenspiel von Luftkanal 10, Blende 11 und Venturi-Düse 12 wird anhand der Diagramme der Figuren 4a und 4b erläutert. Das Diagramm Figur 4a stellt die Federhöhe einer Achsfeder über der Zeit dar. Figur 4b zeigt den zeitlichen Verlauf der Drücke in dem ersten Druckraum 6, 26 und dem zweiten Druckraum 7, 27. Es wird als Beispiel angenommen, dass die Luftfeder 1, 21 in der Mittelstellung eine Höhe 40 von H = 250 mm und einen statischen Betriebsdruck 41 von p = 6 bar besitzt. Es wird ferner angenommen, dass infolge eines Hindernisses auf der Fahrbahn, z.B. einer Bodenwelle, die Luftfeder 1, 21 eine in Sekundenbruchteilen sehr schnelle Einfederung 42 erfährt. Als Folge der Einfederung 42 wird der Balg 2, 22 zusammengestaucht und es verkleinert sich der erste Druckraum 6, was wiederum mit einem ebenso schnellen Druckanstieg 43 innerhalb des ersten Druckraums 6 einhergeht. Zum Zeitpunkt t = 2s beträgt der Höchstpunkt der Einfederung 44 mit H = 150 mm, wobei der Höchstdruck mit Venturi-Düse 45 in dem ersten Druckraum 6 p = 12bar erreicht, während bei Verwendung der Venturi-Düse 12 ein Höchstdruck 48 von 14,8 bar erreicht wird.

Bei den im Anschluss folgenden Bewegungen handelt es sich um einen Ausschwingvorgang mit der Eigenfrequenz der Luftfederlagerung. Diesen Ausschwingvorgang gilt es mit der erfindungsgemäßen Dämpfungseinrichtung 9, 29 möglichst effektiv zu dämpfen, während bei einem initialen schnellen Anstieg vorzugsweise geringe Dämpferkräfte wirken sollen.

Die Verringerung der Dämpferkräfte bei der initialen Einfederung erfolgt erfindungsgemäß durch den Einsatz einer Venturi-Düse 12. Durch den Druckanstieg 43 im ersten Druckraum 6 öffnet das Rückschlagventil 16, sodass Luft durch die Blende 11 von dem ersten Druckraum 6, 26 in den zweiten Druckraum 7, 27 strömt. Dieser Luftstrom passiert in der Venturi Düse 12 den Unterdruckanschluss 17. Am zweiten Ende 14 des Luftkanals 10 entsteht hierdurch örtlich ein Druck, welcher geringer ist als in dem zweiten Druckraum 7, 27. Somit erfährt während des ersten Druckanstiegs in dem zweiten Druckraum 7, 27 der Luftkanal 10 zwischen seinen Enden 13 und 14 eine höhere Druckdifferenz als dies ohne Venturi-Düse 12 der Fall wäre. Die höhere Druckdifferenz zwischen dem ersten Druckraum 6, 26 und dem zweiten Druckraum 7, 27 führt zu einem höheren Volumenstrom pro Zeiteinheit und somit zu einer Verringerung des Spitzendrucks bei maximaler Einfederung, welches gleichbedeutend mit einer weicheren initialen Einfederung 42 ist.

In dem dargestellten Ausführungsbeispiel der Dämpfungseinrichtung 9, 29 ist die Blende mit einem großen Querschnitt konzeptioniert. Dies ermöglicht einen ausreichend großen Luftstrom für eine große initiale Einfederung 42 und begünstigt hierdurch auch die Erzeugung eines hohen Unterdrucks in der Venturi-Düse 12. Das Diagramm in Figur 4b zeigt ebenso den zeitlichen Druckverlauf im zweiten Druckraum 7, 27 im Vergleich zwischen der erfindungsgemäßen vorteilhaften Dämpfung mittels Venturi-Düse 46 und ohne Venturi-Düse 47, sowie den zeitlichen Druckanstieg 43 im ersten Druckraum 6, 26 auf einen Höchstdruck ohne Venturi-Düse 48 im Vergleich zu einen Höchstdruck mit Venturi-Düse 45. Für den weiteren Ausschwingvorgang ist die Venturi-Düse 12 in Kombination mit der Blende 11 ohne nennenswerten Einfluss.

Bei Rück- und Ausfederung kehrt sich die Strömungsrichtung um. In dieser Richtung versperrt das Rückschlagventil 16 den Durchfluss zur Blende 11 und die Luft strömt ausschließlich durch den Kanal 10, wodurch eine hohe Dämpfungswirkung erzeugt wird.

Bei einer neuerlichen Einfederung ist die Amplitude bereits stark reduziert, sodass nur ein geringer Druckunterschied zwischen dem ersten Druckraum 6 und dem zweiten Druckraum 7 herrscht. Der im Vergleich zur initialen Einfederung geringere Druckunterschied führt zu einem kleineren Volumenstrom durch die Blende 11 und damit zu einem deutlich geringeren Einfluss der Venturi-Düse 12. Bei kleiner werdenden Druckunterschieden bleibt das federbelastete Rückschlagventil 16 und somit auch die Blende 11 geschlossen, sodass die Dämpfung ausschließlich über den Luftkanal 10 erfolgt.

### Bezugszeichenliste (Teil der Beschreibung)

- 1: Luftfeder
- 2: Balg
- 3: Unteres Anschlussteil
- 4: Oberes Anschlussteil
- 5: Hohlkörper
- 6: Erster Druckraum
- 7: Zweiter Druckraum
- 8: Anschluss zur externen Luftversorgung
- 9: Dämpfungseinrichtung
- 10: Luftkanal
- 11: Blende
- 12: Venturi-Düse
- 13: Erstes Ende
- 14: Zweites Ende
- 15: Einströmseite
- 16: Federbelastetes Schließelement
- 17: Unterdruckanschluss

- 21: Luftfeder
- 22: Balg
- 24: Oberes Anschlussteil
- 25: Kolben / Hohlkörper
- 26: Erster Druckraum
- 27: Zweiter Druckraum
- 28: Anschluss zur externen Luftversorgung
- 29: Dämpfungseinrichtung

- 40: Höhe der Luftfeder in der Mittelstellung
- 41: statischen Betriebsdruck
- 42: Einfederung
- 43: Druckanstieg
- 44: Höchstpunkt der Einfederung
- 45: Höchstdruck in dem ersten Druckraum mit Venturi-Düse
- 46: Dämpfungskennlinie des zweiten Druckraums mit Venturi-Düse
- 47: Dämpfungskennlinie des zweiten Druckraums ohne Venturi-Düse
- 48: Höchstdruck in dem ersten Druckraum ohne Venturi-Düse

## Patentansprüche

1. Luftfeder (1, 21), umfassend
einen flexiblen Balg (2, 22) aus elastomerem Material,
ein unteres Anschlussteil (3) und ein oberes Anschlussteil (4, 24),
einen Hohlkörper (5, 25) und
eine Dämpfungseinrichtung (9, 29),
wobei der Balg (2, 22), das untere Anschlussteil (3) und das obere Anschlussteil (4, 24) einen ersten Druckraum (6, 26) bilden,
wobei der Hohlkörper (5, 25) einen zweiten Druckraum (7, 27) bildet und die Dämpfungseinrichtung (9, 29) aufweist,
wobei die Dämpfungseinrichtung (9, 29) einen Luftkanal (10) mit einem ersten Ende (13) und einem zweiten Ende (14) und eine Blende (11) aufweist,
wobei die Blende (11) und der Luftkanal (10) den ersten Druckraum (6, 26) und den zweiten Druckraum (7, 27) miteinander verbinden, wobei die Dämpfungseinrichtung (9) eine Venturi-Düse (12) aufweist,
wobei die Blende (11) in eine Einströmseite (15) der Venturi-Düse (12) mündet und das zweite Ende (14) des Luftkanals (10) in einen Unterdruckanschluss (17) der Venturi-Düse (12) mündet,
**dadurch gekennzeichnet, dass**
der Luftkanal (10) wendelförmig ausgebildet ist.

2. Luftfeder (1, 21) nach Anspruch 1,
**dadurch gekennzeichnet, dass**
der Hohlkörper (5, 25) innerhalb des ersten Druckraums (6, 26) angeordnet ist.

3. Luftfeder (1, 21) nach Anspruch 1,
**dadurch gekennzeichnet, dass**
der Hohlkörper (5, 25) außerhalb des ersten Druckraums (6, 26) angeordnet ist.

4. Luftfeder (1) nach Anspruch 1,
**dadurch gekennzeichnet, dass**
die Luftfeder (1) als eine Faltenbalgluftfeder ausgebildet ist.

5. Luftfeder (21) nach Anspruch 1,
**dadurch gekennzeichnet, dass**
die Luftfeder (21) als eine Rollbalg-Luftfeder ausgebildet ist, bei der das untere Anschlussteil (3) durch einen Kolben (25) gebildet ist.

6. Luftfeder (21) nach Anspruch 5,
**dadurch gekennzeichnet, dass**
der Kolben (25) als zweiter Druckraum (27) ausgebildet ist.

7. Luftfeder (1, 21) nach einem der vorhergehenden Ansprüche,
**dadurch gekennzeichnet, dass**
obere Anschlussteil (4, 24) einen Anschluss (8, 28) zur externen Luftversorgung aufweist.

8. Luftfeder (1, 21) nach einem der vorhergehenden Ansprüche,
**dadurch gekennzeichnet, dass**
der Luftkanal (10) schlauch- oder rohrförmig ausgebildet ist.

9. Luftfeder (1, 21) nach einem der vorhergehenden Ansprüche,
**dadurch gekennzeichnet, dass**
die Blende (11) durch ein Rückschlagventil mit einem federbelastetem Schließelement (16) verschließbar ist.

10. Sitzfederung eines Kraftfahrzeugs mit einer Luftfeder (1, 21) nach einem der Ansprüche 1 bis 9.

11. Kabinenlagerung eines Kraftfahrzeugs mit einer Luftfeder (1, 21) nach einem der Ansprüche 1 bis 9.

12. Maschinenlagerung mit einer Luftfeder (1, 21) nach einem der Ansprüche 1 bis 9.

## Claims

1. Air spring (1, 21), comprising
a flexible bellows (2, 22) made of elastomeric material,
a lower connection part (3) and an upper connection part (4, 24),
a hollow body (5, 25) and
a damping device (9, 29),
wherein the bellows (2, 22), the lower connection part (3) and the upper connection part (4, 24) form a first pressure chamber (6, 26),
wherein the hollow body (5, 25) forms a second pressure chamber (7, 27) and has the damping device (9, 29),
wherein the damping device (9, 29) has an air duct (10) with a first end (13) and a second end (14) and an orifice (11),
wherein the orifice (11) and the air duct (10) connect the first pressure chamber (6, 26) and the second pressure chamber (7, 27) to one another, wherein the damping device (9) has a Venturi nozzle (12),
wherein the orifice (11) opens into an inflow side (15) of the Venturi nozzle (12), and the second end (14) of the air duct (10) opens into a negative-pressure connection (17) of the Venturi nozzle (12),
**characterized in that**
the air duct (10) is helical.

2. Air spring (1, 21) according to Claim 1,
**characterized in that**
the hollow body (5, 25) is arranged inside the first pressure chamber (6, 26).

3. Air spring (1, 21) according to Claim 1,
**characterized in that**
the hollow body (5, 25) is arranged outside the first pressure chamber (6, 26).

4. Air spring (1) according to Claim 1,
**characterized in that**
the air spring (1) is configured as a folding bellows air spring.

5. Air spring (21) according to Claim 1,
**characterized in that**
the air spring (21) is configured as a rolling bellows air spring in which the lower connection part (3) is formed by a piston (25).

6. Air spring (21) according to Claim 5,
**characterized in that**
the piston (25) is configured as a second pressure chamber (27).

7. Air spring (1, 21) according to one of the preceding claims,
**characterized in that**
the upper connection part (4, 24) has a connection (8, 28) for external air supply.

8. Air spring (1, 21) according to one of the preceding claims,
**characterized in that**
the air duct (10) is hose-shaped or tubular.

9. Air spring (1, 21) according to one of the preceding claims,
**characterized in that**
the orifice (11) can be closed by a check valve having a spring-loaded closing element (16).

10. Seat suspension of a motor vehicle having an air spring (1, 21) according to one of Claims 1 to 9.

11. Cab mounting of a motor vehicle having an air spring (1, 21) according to one of Claims 1 to 9.

12. Machine mounting having an air spring (1, 21) according to one of Claims 1 to 9.

## Revendications

1. Ressort pneumatique (1, 21) comprenant
un soufflet flexible (2, 22) en matériau élastomère,
une pièce de raccordement inférieure (3) et une pièce de raccordement supérieure (4, 24),
un corps creux (5, 25), et
un dispositif d'amortissement (9, 29),
le soufflet (2, 22), la pièce de raccordement inférieure (3) et la pièce de raccordement supérieure (4, 24) formant une première chambre de pression (6, 26),
le corps creux (5, 25) formant une deuxième chambre de pression (7, 27) et comprenant le dispositif d'amortissement (9, 29),
le dispositif d'amortissement (9, 29) présentant un conduit (10) pour de l'air ayant une première extrémité (13) et une deuxième extrémité (14), et un orifice (11), l'orifice (11) et le conduit pour l'air (10) reliant la première chambre de pression (6, 26) et la deuxième chambre de pression (7, 27) entre elles, le dispositif d'amortissement (9) comprenant une buse Venturi (12),
l'orifice (11) débouchant dans un côté d'entrée (15) de la buse Venturi (12), et la deuxième extrémité (14) du conduit pour l'air (10) débouchant dans un raccord à dépression (17) de la buse Venturi (12),
**caractérisé en ce que**
le conduit pour l'air (10) est réalisé en forme d'hélicoïde.

2. Ressort pneumatique (1, 21) selon la revendication 1,
**caractérisé en ce que**
le corps creux (5, 25) est agencé à l'intérieur de la première chambre de pression (6, 26).

3. Ressort pneumatique (1, 21) selon la revendication 1,
**caractérisé en ce que**
le corps creux (5, 25) est agencé à l'extérieur de la première chambre de pression (6, 26).

4. Ressort pneumatique (1) selon la revendication 1,
**caractérisé en ce que**
le ressort pneumatique (1) est réalisé sous la forme d'un ressort pneumatique à soufflet.

5. Ressort pneumatique (21) selon la revendication 1,
**caractérisé en ce que**
le ressort pneumatique (21) est conçu sous la forme d'un ressort pneumatique à soufflet ondulé, la partie de raccordement inférieure (3) étant formée par un piston (25).

6. Ressort pneumatique (21) selon la revendication 5,
**caractérisé en ce que**
le piston (25) est conçu comme une deuxième chambre de pression (27).

7. Ressort pneumatique (1, 21) selon l'une des revendications précédentes,
**caractérisé en ce que**
la partie de raccordement supérieure (4, 24) présente un raccord (8, 28) pour l'alimentation en air extérieur.

8. Ressort pneumatique (1, 21) selon l'une des revendications précédentes,
**caractérisé en ce que**
le conduit pour l'air (10) est réalisé sous forme de tuyau ou de tube.

9. Ressort pneumatique (1, 21) selon l'une des revendications précédentes,
**caractérisé en ce que**
l'orifice (11) est apte à être fermé par un clapet anti-retour avec un élément de fermeture (16) sollicité par ressort.

10. Suspension de siège d'un véhicule automobile comprenant un ressort pneumatique (1, 21) selon l'une des revendications 1 à 9.

11. Suspension de cabine d'un véhicule automobile comprenant un ressort pneumatique (1, 21) selon l'une des revendications 1 à 9.

12. Suspension de machine comprenant un ressort pneumatique (1, 21) selon l'une des revendications 1 à 9.
